## Europäisches Patentamt
## European Patent Office
## Office européen des brevets

(19)

(11) Publication number: **0 056 316**
**B1**

(12) **EUROPEAN PATENT SPECIFICATION**

(45) Date of publication of patent specification: **29.10.86**

(21) Application number: **82300097.1**

(22) Date of filing: **08.01.82**

(51) Int. Cl.⁴: **G 01 N 35/00,** G 01 N 1/00, G 01 N 21/55

(54) **Apparatus for scanning a test element.**

(30) Priority: **09.01.81 US 223559**

(43) Date of publication of application:
**21.07.82 Bulletin 82/29**

(45) Publication of the grant of the patent:
**29.10.86 Bulletin 86/44**

(84) Designated Contracting States:
**BE CH DE FR GB IT LI SE**

(56) References cited:
**DE-A-3 017 292
US-A-3 562 539
US-A-3 730 364
US-A-3 806 256
US-A-4 224 032**

**RESEARCH DISCLOSURE, no. 197, September
1980, pages 375,376, no. 19730, Havant,
Hampshire (GB); "Slide transfer apparatus"**

(73) Proprietor: **EASTMAN KODAK COMPANY
343 State Street
Rochester New York 14650 (US)**

(72) Inventor: **Jakubowicz, Raymond Francis
Kodak Park
Rochester New York (US)**
Inventor: **Schnipelsky, Paul Nicholas
Kodak Park
Rochester New York (US)**

(74) Representative: **Baron, Paul Alexander Clifford
et al
Kodak Limited Patent Department Headstone
Drive
Harrow Middlesex HA1 4TY (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

## Description

The present invention relates to apparatus for the chemical analysis of substances, known as analytes, in liquids. More specifically, it relates to apparatus for scanning a test element used in measuring an analyte of a liquid.

Test elements have been developed, for use in chemical analyses, which are adapted to receive a drop of sample liquid and to produce a detectable change which is proportional to a selected analyte in the liquid. The change can be detected by a reflectometer which projects a beam of radiation onto a bottom surface of the test element and measures the radiation reflected from the element.

One type of reflectometer which is useful in processing test elements comprises an optical scanning head which includes light-emitting optical fibers and light-collecting optical fibers. In the use of optical fibers, it is desirable to locate the scanning head as close as possible to the test element to minimize light losses, and such a scanning head gives optimal performance if it is pressed against the test element during the scanning thereof. However, if the head contacts the test element during scanning, there is a problem of wear and scratching of the scanning head, particularly if the elements are moved across the face of the scanning head as they are moved into and out of the reflectometer.

Apparatus for measuring the reflectance from chromatograms is disclosed in U.S. Patent Specification No. 3,562,539. The disclosed apparatus comprises a fiber optic scanning head which conducts light to a small defined area of the chromatogram and conducts reflected light to a photocell. The scanning head rests on a glass plate which covers the chromatogram and maintains the head a constant distance from the chromatogram. In such an arrangement, there are light losses associated with spacing the scanning head from the chromatogram. Further, there is a problem in attempting to use this arrangement in automatic apparatus in which a large number of slides are continually moved past the scanning head.

It is an object of the present invention to overcome the aforementioned problems of prior art devices by providing a reflectometer, for use in apparatus for continuously processing test elements, in which the test elements are moved into contact with a scanning head, without incurring undue wear on the scanning head.

In accordance with the present invention there is provided apparatus for measuring an analyte in a liquid by scanning a generally flat test element containing the liquid, said apparatus including a reflectometer having a contact face through which the test element supported in a scanning position may be scanned by electromagnetic energy characterized in that bias means is provided for biasing the test element and said face into direct contact with each other while the element is being scanned, and removing means is adapted to remove a scanned test element from said reflectometer, said removing means including first means for moving said scanned element and said face out of contact with each other and second means for pushing said element away from said face and out of said scanning position, said second means being operative only after the operation of said first means.

Slide manipulation apparatus having bias means and removing means is known for example from Research Disclosure No. 197, Sept. 1980, pages 375—376, No. 19730, Havant, Hampshire (GB), but not in the context of a reflectometer provided with a contact face.

An advantage of the present invention is that it permits the scanning head of a reflectometer to be moved into direct contact with the test element, rather than being spaced from the test element by the thickness of an intermediate plate; thus, the light losses are kept to a minimum. Such operation of the reflectometer is achieved, without damaging the scanning head and without the use of complex mechanisms to separate the scanning head and the test element.

Embodiments of the present invention will now be described, by way of example, with reference to the accompanying drawings in which:

Fig. 1 is an isometric view of an analyzer constructed in accordance with the invention;

Fig. 2 is a sectional view taken generally along the line designated II—II in Fig. 1, with certain of the parts shown schematically;

Fig. 3 is a perspective view of the scanning head, the illumination source, and the photodetector in the reflectometer of the present invention;

Fig. 4 is a sectional view taken generally along the line IV—IV in Fig. 3; and

Figs. 5a—5f are fragmentary elevational views, with certain parts shown schematically, illustrating the operation of the present invention.

The specific embodiments described herein refer to a fiber optics reflectometer; the invention is also applicable to apparatus using any other type of reflectometer that contacts a test element during the scanning of the element. As used herein, "scan" refers to the examining of at least a portion of a test element by the use of electromagnetic energy, whether or not the element is examined a portion at a time in an ordered sequence.

In the description which follows blood serum is referred to as the preferred liquid under analysis. Other analyte-containing liquids can also be analyzed, including industrial liquids containing nonbiological analytes.

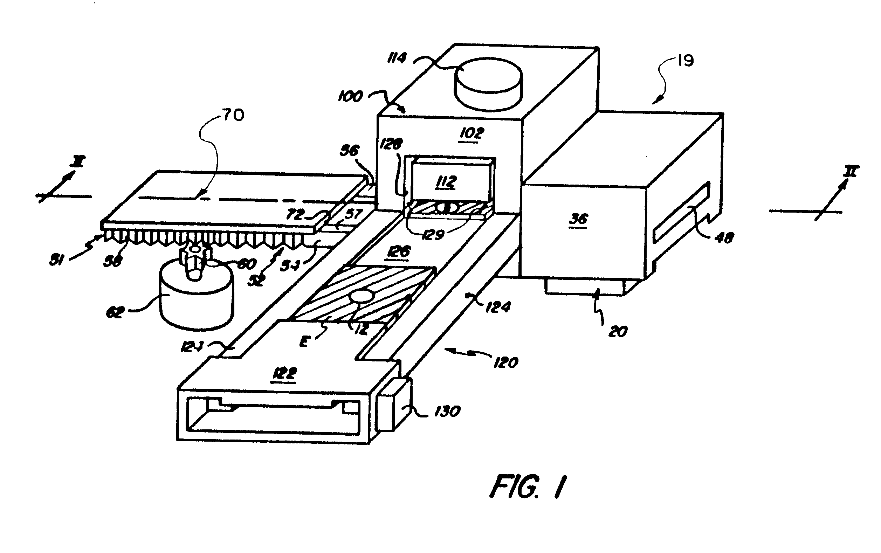

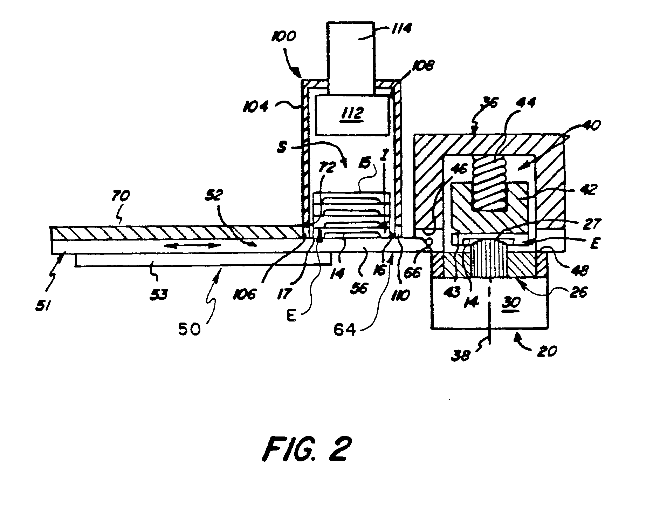

In Fig. 1, there is shown apparatus 19 which is capable of measuring a variety of analytes of liquids, particularly those of biological liquids. This is accomplished through the use of generally flat test elements E that include one or more sample-receiving portions 12 mounted in a plastic frame member 15 (Fig. 2). The sample-receiving portions 12 are mounted on a transparent, liquid-impervious support 14. The sample is applied by depositing a predetermined quantity of liquid onto the test element E. After receiving the liquid, the element E is moved into a reflectometer 20; when the element E is moved to the right, as viewed in Fig. 2, an edge 16 becomes the leading edge and an edge 17 is the trailing edge.

The layers (not shown) of the test elements E preferably are constructed in the manner described in U.S. Patent Specifications Nos. 3,992,158, and 4,066,403. Deposited liquid spreads into the layers where a reaction takes place that generates a detectable change. U.S. Patent Specification No. 4,169,751, discloses one useful form of such a test element wherein the sample-receiving portion is staked to a support frame apertured to receive a liquid drop.

Apparatus 19 comprises a bias means 40 (Fig. 2) for pressing a test element E, in a scanning position, into contact with a scanning head 26 of the reflectometer 20; a removing means 50 is provided for removing a scanned test element E from the reflectometer 20, after first moving the test element E and the scanning head 26 of the reflectometer 20 out of contact with each other, as described hereinafter. Removing means 50 is also adapted to deliver a test element E to reflectometer 20 from an incubator 100, and a feeder means 120 is provided to load test elements E into the incubator 100 (Fig. 1).

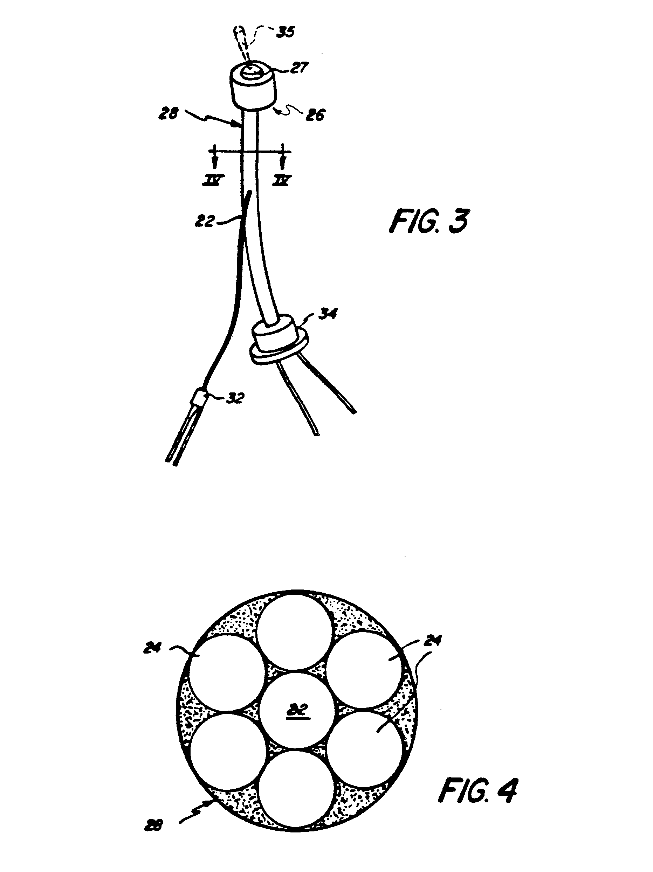

The reflectometer 20 (Figs. 2—4) comprises at least one light-emitting optical fiber, designated 22, and a plurality of light-collecting fibers, designated 24. Preferably, light-collecting fibers 24 are geometrically positioned around light-emitting fiber 22, as shown in Fig. 4. The fibers 22, 24, are joined together to form a stem 28 (Fig. 3) which includes an optical scanning head 26 having a contact face 27, which is curved as shown in Fig. 2; scanning head 26 can also have a flat contact face (not shown).

Reflectometer 20 comprises an illumination source 32 and a photodetector 34 which are preferably housed as a unit 30 (Figs. 2 and 3). Light-emitting fiber 22 is coupled to illumination source 32 (Fig. 3) which is preferably a light-emitting diode having an output at a suitable wavelength. Wavelengths particularly useful in analyses of biological fluids includes 565, 590, 610, and 700 nm. The light-collecting fibers 24 (Fig. 4) are cemented as a bundle to a silicon photodetector 34 (Fig. 3) within unit 30. Alternative light sources (not shown) can be used, such as a filament lamp, quartz halogen lamp, or xenon flash tube, filtered to the desired wavelength either at the source or at the photodetector.

When using a light-emitting diode as source 32, a discontinuous "on-off" mode of operation is a preferred operating procedure. Such discontinuous mode of operation permits more than one light-emitting fiber and illumination source to be included in the apparatus, each source being operated to emit a different wavelength. The use of multiple light-emitting fibers is preferred if more than one kind of analyte is to be tested.

The readings of the photodetector are conveyed to a conventional data processor (not shown), such as a microprocessor, which provides an output to a display screen (not shown) or a printer (not shown). The data processor preferably includes the capability for calibrating the analyzer.

The angle of reflectance within the fibers 22 and 24 is a characteristic of the fibers chosen, and can be, e.g., about 30°. Such optical fibers are conventional and can be selected from a variety of materials; preferred materials for such fibers includes polymethyl methacrylate and polystyrene. Fiber 22 emits a cone of light 35 (Fig. 3) into which a test element is placed for detection, as hereinafter described.

A chamber 36 provides a read station for the test element E (Fig. 2). Scanning head 26, having center axis 38, is vertically disposed in chamber 36 which includes bias means 40 for pressing support 14 of the test element E into contact with head 26. Bias means 40 comprises a platen 42 having a beveled edge 43 and a spring 44 under compression.

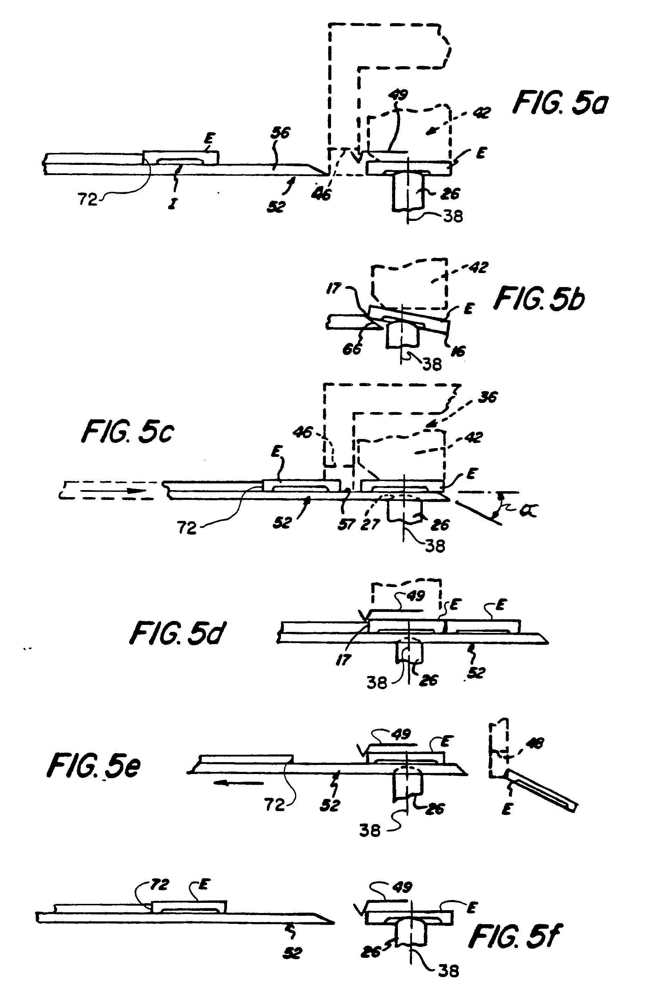

Test elements E are introduced into chamber 36 through an access aperture 46, and the scanned test elements E are removed from reflectometer 20 through an exit aperture 48. Retaining means in the form of a pair of springs 49, one of which is shown diagrammatically in Figs. 5a and 5d—5f, are mounted in chamber 36. Preferably, the two springs 49 are disposed at opposite sides of aperture 46 to assist in holding a newly positioned test element E in place until platen 42 presses it against head 26, as is described hereinafter. Springs 49 are mounted above the test element E and are adapted to contact a test element E as it is moved into chamber 36.

In accordance with one aspect of the present invention, removing means 50 is provided with a first means for lifting test element E off face 27 of the scanning head 26 and a second means for thereafter pushing the element E away from face 27 and out of the reflectometer 20. The first means for lifting test element E off face 27 includes a pusher element 52 mounted for reciprocation on fixed rails 53 (Fig. 2). Element 52 is preferably bifurcated and includes two arms 54 and 56 (Fig. 1). Arms 54 and 56 are spaced sufficiently to pass on opposite sides of scanning head 26 when the arms 54, 56, are advanced into chamber 36. Arms 54 and 56 each have an upper supporting surface 57 (Fig. 1) which projects above the level of face 27 of scanning head 26. (See Fig. 5c.) Pusher element 52 includes one end 51 which is provided on its exterior surface with a rack gear 58 (Fig. 1). Gear 58 is engaged by a pinion gear 60 driven by a conventional stepping motor 62, such as a Berger/Lahr stepping motor.

At a leading end 64 of pusher element 52, a camming surface 66 (Fig. 2) is provided on arm 54 and on arm 56. Each of the camming surfaces 66 is beveled at an angle α (Fig. 5c). Preferred values of this angle are between about 15 and 60 degrees, most preferably about 20 degrees.

Arms 54 and 56 slide into and through aperture 46 from a starting position in which camming surfaces 66 are free of contact with the test element E within the reflectometer 20. As is described hereinafter, surfaces 66 are adapted to contact an element E and lift the element E off face 27 after the element E has been scanned.

To move a test element E into chamber 36, the removing means 50 includes a plate 70 which connect arms 54 and 56. Plate 70 has a forward edge 72 (Fig. 1) that extends from arm 54 to arm 56. The height of edge 72 is selected so that it is slightly less than the thickness of a test element E (Fig. 5a). Edge 72 of plate 70 engages a test element E at its trailing edge 17, and pushes the element E into the reflectometer 20 synchronously with the removal of the element E just read.

It will be appreciated that the above-described apparatus is useful to scan the test element E by manually loading them one at a time at position I on arms 54 and 56, and by pushing them into chamber 36. A preferred construction, however, is one in which a plurality of sample-containing test elements E are stored in a stack S adjacent reflectometer 20, and above pusher element 52 such that the bottommost element E in the stack S is maintained in position I. To this end, the incubator 100 comprising a housing 102 (Fig. 1) is mounted adjacent to chamber 36. Housing 102 comprises a wall 104 (Fig. 2) which includes an aperture 106 sized to allow edge 72 of pusher element 52 to enter and engage only the bottommost test element E of the stack S. A wall 108, opposite to wall 104, has an output aperture 110 adapted to permit the bottommost element E to be transferred into reflectometer 20.

To cover the stack S and to urge the test elements E downwardly, a platen 112 is provided which includes a handle 114. Platen 112 is also useful to heat the test elements A, either passively or actively. Also, conventional heating elements (not shown) for incubator 100 can be disposed at appropriate locations. If the test elements E are manually loaded onto the stack S, platen 112 can be raised by means of handle 114.

Most preferably, however, test elements E are loaded into incubator 100 by feeder means 120 (Fig. 1). Feeding means 120 comprises a sliding pusher 122 mounted on two rails 124. A test element support surface 126 is provided between rails 124. Feeder means 120 cooperates with an aperture 128 in incubator 100 to allow the insertion of test elements E, in the direction of arrows 129, onto the top of the stack S. A handle 130 on pusher 122 permits pusher 122 to be manually operated in conjunction with the manual raising of handle 114 of the platen. Alternatively, means (not shown) are provided to mechanically or electronically link handles 114 and 130 to cause platen 112 to rise automatically as pusher 122 is advanced toward aperture 128.

The operation of the analyzer will be apparent from the preceding description. The operation of pusher element 52 is illustrated in Figs. 5a—5f. A test element E in the scanning position in chamber 36 is scanned while it is pressed by platen 42 into contact with scanning head 26 (Fig. 5a). A second test element E, yet to be scanned, is in position I on pusher element 52 which is in its starting position. As pusher element 52 is advanced from its starting position into aperture 46, camming surfaces 66 lift the scanned element E off scanning head 26, against the downward urging of platen 42 (Fig. 5b), first by lifting trailing edge 17 in a direction generally aligned with the center axis 38 of head 26. Next, leading edge 16 of the scanned element E ia raised and at the same time, a second element E is carried part-way into aperture 46 of chamber 36 (Fig. 5c). At this point, the scanned element E in chamber 36 no longer contacts face 27. As the second element E is pushed by edge 72, is pushes the scanned element E out from under platen 42 (Fig. 5d). Retaining springs 49 slide over the test element E being loaded into chamber 36 and slip into place behind the trailing edge 17 thereof. Pusher element 52 is now in its advanced position (Fig. 5d). During movement of the elements E into and out of contact with platen 42, the test elements E do not contact head 26. Thus, movement of the test elements E perpendicularly to the center axis 38 of head 26 does not cause wear on the head 26.

After loading a new test element E into chamber 36, pusher element 52 is returned to its starting position (Fig. 5f); test element E in chamber 36 is kept from returning by the action of retaining springs 49. As the pusher element 52 is being returned to its starting position, the scanned test element E drops out through aperture 48. After pusher element 52 clears spring 49 (Fig. 5f) the test element E in chamber 36 is moved into the scanning position in contact with face 27 of scanning head 26. A new test element E is then moved into position I, in front of edge 72, and the cycle is repeated.

In an alternative arrangement (not shown) the reflectometer is movable, and the platen therein is fixed. In such an arrangement, springs bias the reflectometer toward the platen, and a camming surface on the pusher element bears against the reflectometer to cam it away from the platen, prior to movement of the test element into the scanning position.

The apparatus described above is particularly advantageous because it provides an essentially wear-free reflectometer, using relatively simple mechanisms. Such apparatus is particularly useful in applications of relatively low throughput, such as in doctors' offices.

## Claims

1. Apparatus for measuring an analyte in a liquid by scanning a generally flat test element (E) containing the liquid, said apparatus including a reflectometer (20) having a contact face (27) through which the test element (E) supported in a scanning position may be scanned by electromagnetic energy characterized in that bias means (40) is provided for biasing the test element (E) and said face (27) into direct contact with each other while the element (E) is being scanned, and removing means (50) is adapted to remove a scanned test element (E) from said reflectometer (20), said removing means (50) including first means (52, 66) for moving said scanned element (E) and said face (27) out of contact with each other and second means (70, 72) for pushing said element (E) away from said face (27) and out of said scanning position, said second means (70, 72) being operative only after the operation of said first means (66).

2. Apparatus according to claim 1, characterized in that said reflectometer (20) comprises an optical scanning head (26) which includes said contact face (27) and has a center axis (38), and said first means (52, 66) comprises a movable pusher element (52) which includes a camming surface (66) for moving the scanned test element (E) away from said face (27) in a direction that is generally aligned with said axis (38).

3. Apparatus according to claim 2, characterized in that said pusher element (52) is mounted for movement between a starting position wherein said pusher element (52) is free of contact of the test element (E) in the scanning position, and an advanced position wherein said pusher element (52) is under and in contact with the test element (E).

4. Apparatus according to claim 3, characterized in that means (58, 60, 62) is provided for moving said pusher element (52) between the starting and advanced positions.

5. Apparatus according to claim 3 or 4, characterized in that said pusher element (52) is bifurcated at one end (64) which includes said camming surface (66), and said end (64) extends on opposite sides of the scanning head (26) when said pusher element (52) is in the advanced position.

6. Apparatus according to claim 5, characterized in that said camming surface (66) is beveled at an angle ($\alpha$) sufficient to lift the test element (E) off said reflectometer (20) and onto said end (64) as said element (52) is moved toward said advanced position.

7. Apparatus according to any one of claims 2 to 6, characterized in that said second means (70, 72) is mounted on said pusher element (52).

8. Apparatus according to claim 7, characterized in that means (100) is provided for supplying test elements (E) in a stack (S) adjacent said reflectometer (20) and above said pusher element (52), and said second means (70, 72) comprises a plate (70) having an edge (72) dimensioned to engage the bottommost element (E) of said stack (S) to move the bottommost element (E) into the scanning position within said reflectometer (20).

9. Apparatus according to any one of the preceding claims, characterized in that said second means (70, 72) is adapted to push said scanning element (E) away from said face (27) by advancing a second element (E) against said scanned element (E).

10. Apparatus according to any one of the preceding claims, characterized in that retaining means (49) is provided for releasably retaining a test element (E) in said reflectometer.

11. Apparatus according to any one of claims 2—10, characterized in that light is transmitted to and from said scanning head (26) by optical fibers (22, 24).

**Patentansprüche**

1. Vorrichtung zum Messen eines Analyten in einer Flüssigkeit durch Abtasten eines im allgemeinen flachen, die Flüssigkeit enthaltenden Testelements (E), wobei die Vorrichtung ein Reflektometer (20) mit einer Kontaktfläche (27) enthält, über die das in einer Abtaststellung gehaltene Testelement (E) mittels elektromagnetischer Energie abgetastet werden kann, dadurch gekennzeichnet, daß eine Vorspanneinrichtung (40) vorgesehen ist, um das Testelement (E) und die Fläche (27) während des Abtastens des Elements (E) in direktem Kontakt miteinander zu halten, und daß eine Entnahmeeinrichtung (50) ein abgetastetes Testelement (E) aus dem Reflektometer (20) entfernen kann, wobei die Entnahmeeinrichtung (50) erste Mittel (52, 66) aufweist, mit denen das abgetastete Testelement (E) une die Fläche (27) außer Berührung miteinander gebracht werden können, sowie zweite Mittel (70, 72), mit denen des Element (E) von der Fläche (27) weg und aus der Abtaststellung herausgeschoben werden kann, und wobei die zweiten Mittel (70, 72) erst nach Betätigung der ersten Mittel (66) wirksam werden.

2. Vorrichtung nach Anspruch 1, dadurch gekennzeichnet, daß das Reflektometer (20) einen optischen Abtastkopf (26) aufweist, der die Berührungsfläche (27) enthält, und eine Mittelachse (38) besitzt, und daß die ersten Mittel (52, 66) ein bewegliches Schieberelement (52) mit einer Nockenfläche (66) umfassen, mit der das abgetastete Testelement (E) von der Fläche (27) weg in eine im wesentlichen mit der Achse (38) ausgerichtete Richtung bewegbar ist.

3. Vorrichtung nach Anspruch 2, dadurch gekennzeichnet, daß das Schieberelement (52) so gelagert ist, daß es zwischen einer Anfangsstellung, in der das Schieberelement (52) mit dem in der Abtaststellung befindlichen Testelement (E) nicht in Berührung steht, und einer vorgeschobenen Stellung, in der sich das Schieberelement (52) unter dem Testelement (E) und mit diesem in Berührung befindet, bewegbar ist.

4. Vorrichtung nach Anspruch 3, dadurch gekennzeichnet, daß Mittel (58, 66, 62) vorgesehen sind, um das Schieberelement (52) zwischen der Anfangsstellung und der vorgeschobenen Stellung zu bewegen.

5. Vorrichtung nach Anspruch 3 oder 4, dadurch gekennzeichnet, daß das Schieberelement (52) an seinem einen die Nockenfläche (66) aufweisenden Ende (64) gegabelt ist und dieses Ende (64) sich auf einander gegenüberliegenden Seiten des Abtastkopfs (26) erstreckt, wenn sich das Schieberelement (52) in seiner vorgeschobene Stellung befindet.

6. Vorrichtung nach Anspruch 5, dadurch gekennzeichnet, daß die Nockenfläche (66) eine Abschrägung aufweist, die unter einem Winkel (α) verläuft, der ausreicht, um das Testelement (E) von dem Reflektometer (20) abzuheben und auf das Ende (64) zu bewegen, wenn das Schieberelement (52) in die vorgeschobene Stellung gebracht wird.

7. Vorrichtung nach einem der Ansprüche 2 bis 6, dadurch gekennzeichnet, daß die zweiten Mittel (70, 72) auf dem Schieberelement (52) gelagert sind.

8. Vorrichtung nach Anspruch 7, dadurch gekennzeichnet, daß eine Einrichtung (100) zur Zuführung von Testelementen (E) von einem Stapel (S) benachbart dem Reflektometer (20) und oberhalb des Schieberelements (52) vorgesehen ist, und daß die zweiten Mittel (70, 72) eine Platte (70) mit einer Kante (72) umfassen, die so bemessen ist, daß sie an dem jeweils untersten Element (E) des Stapels (S) angreift und dieses Element (E) in die Abtaststellung im Reflektometer (20) bewegt.

9. Vorrichtung nach einem der vorhergehenden Ansprüche, dadurch gekennzeichnet daß die zweiten Mittel (70, 72) das abgetastete Testelement (E) von der Fläche (27) wegbewegen können, indem sie ein zweites Testelement (E) gegen das abgetastete Element (E) vorschieben.

10. Vorrichtung nach einem der vorhergehenden Ansprüche, dadurch gekennzeichnet, daß eine Halteeinrichtung (49) zur lösbaren Halterung eines Testelements (E) im Reflektometer vorgesehen ist.

11. Vorrichtung nach einem der Ansprüche 2 bis 10, dadurch gekennzeichnet, daß die Lichtübertragung zum und vom Abtastkopf (26) mittels optischer Fasern (22, 24) erfolgt.

## Revendications

1. Un appareil pour doser un constituant à analyser dans un liquide en balayant un produit analytique (E) généralement plat contenant le liquide, ledit appareil comprenant un réflectomètre (20) ayant une face de contact (27) à travers laquelle le produit analytique (E) maintenu en position de balayage peut être balayé par énergie électromagnétique caractérisé en ce qu'il est pourvu de moyens (40) pour amener le produit analytique (E) en contact direct avec ladite face (27) pendant le balayage du produit analytique (E), et de moyens (50) pour retirer ledit produit analytique (E) balayé dudit réflectomètre (20), lesdits moyens (50) pour le retirer comprenant un premier moyen (52, 66) pour mettre hors contact le produit analytique (E) balayé et ladite face (27), et un deuxième moyen (70, 72) pour pousser ledit produit analytique en l'éloignant de ladite face (27) et de la position de balayage, ledit deuxième moyen (70, 72) n'agissant qu'après ledit premier moyen (66).

2. Un appareil selon la revendication 1, caractérisé en ce que ledit réflectomètre (20) comprend une tête de balayage optique (26) qui possède une face de contact (27) et un axe central (38), et ledit premier moyen (52, 66) comprend un poussoir mobile (52) qui possède une surface de basculement (66) qui permet d'éloigner le produit analytique (E) balayé de ladite face (27) dans une direction généralement alignée avec ledit axe (38).

3. Un appareil selon la revendication 2, caractérisé en ce que ledit poussoir (52) peut se déplacer entre une position de départ dans laquelle ledit poussoir (52) n'est pas en contact avec le produit analytique (E) en position de balayage, et une position avancée dans laquelle ledit poussoir (52) est en contact, par dessous, avec le produit analytique (E).

4. Un appareil selon la revendication 3, caractérisé en ce qu'il est équipé de moyens (58, 60, 62) pour déplacer ledit poussoir (52) entre la position de départ et la position avancée.

5. Un appareil selon la revendication 3 ou 4, caractérisé en ce que ledit poussoir (52) à l'extrémité (64) où se trouve la surface de basculement (66) possède deux bras, et ladite extrémité (64) s'étend de part et d'autre de la tête de balayage (26) quand ledit poussoir (52) est en position avancée.

6. Un appareil selon la revendication 5, caractérisé en ce que ladite surface de basculement (66) est biseautée suivant un angle (α) suffisant pour enlever le produit analytique (E) du réflectomètre (20) et l'amener sur ladite extrémité (64) pendant que ledit poussoir (52) se déplace vers ladite position avancée.

7. Un appareil selon l'une quelconque des revendications 2 à 6, caractérisé en ce que ledit deuxième moyen (70, 72) est monté sur ledit poussoir (52).

8. Un appareil selon la revendication 7, caractérisé en ce qu'il est équipé de moyens (100) pour fournir les produits analytiques (E), mis en une pile (S), adjacents audit réflectomètre (20) et situés au-dessus du poussoir (52), et ledit deuxième moyen (70, 72) comprend une plaque (70) dont le bord (72) a des dimensions permettant d'engager le produit analytique (E) en position inférieure dans ladite pile (S) pour amener ledit produit en position de balayage à l'intérieur dudit réflectomètre (20).

9. Un appareil selon l'une quelconque des revendications précédentes, caractérisé en ce que ledit deuxième moyen (70, 72) permet de pousser ledit produit analytique (E) balayé en l'éloignant de ladite face 27, en faisant avancer un deuxième produit analytique (E) contre ledit produit analytique (E) balayé.

10. Un appareil selon l'une quelconque des revendications précédentes, caractérisé en ce qu'il est pourvu de moyens (49) pour maintenir temporairement un produit analytique (E) dans ledit réflectomètre.

11. Un appareil selon l'une quelconque des revendications 2 à 10 caractérisé en ce que la lumière est transmise à et par ladite tête de balayage (26) pour fibres optiques (22, 24).

FIG. I

FIG. 2

FIG. 3

FIG. 4

FIG. 5a

FIG. 5b

FIG. 5c

FIG. 5d

FIG. 5e

FIG. 5f

4